# EUROPEAN PATENT SPECIFICATION

(11) **EP 2 862 967 B1**
(45) Date of publication and mention of the grant of the patent: **10.07.2019**
(21) Application number: 14184366.4
(22) Date of filing: 11.09.2014
(51) Int. Cl.: B01D 39/16

(54) **Linear core-sheath type textile formation containing a sheath of polymer nanofibres and filtering agent for filtering gaseous media**
Lineare kernmantelartige Textilformation mit einem Mantel aus Polymernanofasern und Filtermittel für gasförmige Medien
Formation textile de type noyau-enveloppe linéaire contenant une enveloppe de nanofibres polymères et un agent de filtrage destiné à filtrer des milieux gazeux

(30) Priority: 13.09.2013 CZ 20130694
(43) Date of publication of application: 22.04.2015
(73) Proprietor: Technicka Univerzita V Liberci, 461 17 Liberec 1 (CZ)
(72) Inventor: Sanetrnik, Filip, 46014 Liberec (CZ); Komarek, Michal, 47301 Novy Bor (CZ); Jirsak, Oldrich, RNDr., 46010 Liberec (CZ); Hruza, Jakub, 46343 Svetla pod Jestedem (CZ)
(74) Representative: Musil, Dobroslav

(56) References cited:
- JP-A- 2009 219 952
- JP-A- 2010 053 457
- US-A1- 2004 255 783
- FATEMEH BATENI ET AL: "Structural characterization and investigation of selected properties of hybrid yarn coated with carbon nanotube composite nanofibers", JOURNAL OF APPLIED POLYMER SCIENCE, vol. 128, no. 2, 14 August 2012 (2012-08-14), pages 1143-1151, XP055051163, ISSN: 0021-8995, DOI: 10.1002/app.38373
- MOHAMED BASEL BAZBOUZ ET AL: "A new mechanism for the electrospinning of nanoyarns", JOURNAL OF APPLIED POLYMER SCIENCE, vol. 124, no. 1, 4 October 2011 (2011-10-04), pages 195-201, XP055015565, ISSN: 0021-8995, DOI: 10.1002/app.31930

## Description

### Technical field

The invention concerns a linear core-sheath type textile formation containing a sheath of polymer nanofibres.

In addition, the invention concerns a filtering device for filtering gaseous media, containing at least one filtering layer which contains said linear textile formation.

### Background art

A number of different methods of production of nanofibres, i.e., fibres less than 1 micrometre in diameter, based on various physical and/or chemical principles, are known at present. The highest productivity and highest evenness of a layer of nanofibres is achieved by means of electrostatic spinning of polymer solutions or melts, in which the nanofibres are formed by a force exerted by an electric field created between at least one collecting electrode and at least one spinning electrode of an elongated shape from the polymer solution or melt, situated on the surface of the spinning electrode. According to for example EP 1673493 , the spinning electrode consists of a rotating elongated object; according to EP 2173930, it contains a string-shaped spinning element that is static or moves longitudinally; according to EP 2059630, the spinning element is string-shaped and moves along a circle, etc.

A typical product of all these methods is a planar layer of nanofibres. Generally combined with at least one other supporting and/or covering layer of different material, it has numerous applications, particularly in filtering, medicine, etc., but its disadvantage is that its relative dense and compact structure barely permits any increase of the number of nanofibres per unit of its surface area, and thus its filtering effect, without a disproportionate increase of the pressure gradient.

The use of linear formations containing nanofibres or more complex three-dimensional structures composed of such linear formations appears to be a suitable alternative permitting an increase of the filtering capacity with significantly reduced increase of the pressure gradient. However, there is currently no method that would permit the production of such linear formations of convenient mechanical properties and distribution of nanofibres, resulting in a non-existence of such linear formations.

Admittedly, US 2008265469 proposes a method for producing nanofibre yarn based on direct pulling of nanofibres off several pairs of opposing nozzles charged with opposite electric charges, and their subsequent bonding, but it is only capable of achieving a low output, which will not be constant due to the mutual influencing of the electric fields of the individual nozzles. The resulting yarn, if any is indeed made, will then be of an uneven structure and only minimal tensile strength, meaning that it cannot be processed in any way, e.g., wound, stretched in a frame, etc. This method and the yarn produced by it are thus only suitable for experimental use in a laboratory.

US 20090189319 then proposes a method for producing a linear formation composed of nanofibres by means of twisting, or bundling, of a planar layer of nanofibres. However, the disadvantage is its considerable process complexity and lengthiness, as well as the fact that the linear formation produced will only have minimal tensile strength, which will not permit any further processing and, in fact, any practical application. As a result, this method and the linear formation produced by it are again only suitable for laboratory use at the best.

Another known method for producing a linear nanofibre formation is electrostatic spinning using a collecting electrode according to WO 2009049564. In one of the versions, said collecting electrode contains a system of singular electric charges arranged in a line or along the circumference of a rotating disc, with the nanofibres produced being deposited preferentially along these singular charges and thus forming a linear formation. Since the nanofibres have an opportunity to interweave in this case, and at least some of them are deposited into the formation produced in this way before their complete solidification, the tensile strength of formation made in this way may be higher than that of formation made by any one of the above methods. However, it is still insufficient for practical use. Another disadvantage of this process is the final length of the linear nanofibre formation made, which is limited by the dimensions of the collecting electrode. This method cannot be applied successfully on an industrial scale either due to these disadvantages.

In order to achieve a higher tensile strength and improve other mechanical parameters, several methods have been proposed for producing a linear formation containing a core composed of thread, yarn or similar linear textile formation, with a sheath composed of nanofibres applied to it. The core gives the formation the required mechanical parameters, particularly tensile strength, etc., while the sheath gives it the convenient properties of nanofibres originating primarily from their morphology, such as large specific surface, excellent sorption properties, etc.

To this end, WO 2009049564 proposes a method for producing a linear formation in which a linear core is wrapped by a narrow planar layer of nanofibres. However, a mere application, or wrapping of a planar layer of nanofibres around the core does not guarantee their sufficiently durable coupling, and the layer of nanofibres is stripped off the core by virtually any manipulation or strain. An even more significant drawback of this method is the complicated, if not totally impossible, production of practicable narrow planar layer of nanofibres, because in almost any manipulation, the planar layer of nanofibres is ripped into tiny fragments due to its low strength and high adhesion; these fragments cluster into tufts and/or stick to nearby objects. Thus, continuous feed of planar layer of nanofibres to the core and production of an even and continuous sheath cannot be achieved using currently available technical equipment. Therefore, this process is not suitable for industrial use due to its process complexity and lack of reliability, and is only usable for research purposes.

These and other deficiencies were supposed to be eliminated by the method described in WO 2008106904, in which the nanofibres are applied to a core consisting of thread or yarn directly in the course of electrostatic spinning. Before the nanofibres are applied, the core is subjected to false twisting, with the nanofibres mechanically fixing themselves to the core structure as the twist is formed and then eliminated. However, it turned out during experiments that the mechanical attachment of the nanofibres achieved is insufficient to allow further processing of the linear formation produced. Another drawback of this method is relatively low output of electrostatic spinning caused primarily by concentration of the electric field in the vicinity of the core, leading to total or partial elimination of electric charge of nanofibres and change of their trajectories within the electric field, which results in large portion of them being deposited outside the surface of the core. As a consequence, the factual usefulness of this method and the linear formation produced by it is very limited.

To eliminate these drawbacks, WO 2011063772 proposed a method for producing linear nanofibre formation containing a core, to which nanofibres are deposited by means of electrostatic spinning, the essence being that outside the spinning area, the core runs along the circumference of at least one guide roller, over which it rolls, so that it spins around with respect to the nanofibres deposited, resulting in their even attachment along its entire circumference. However, to achieve sufficiently strong deposition of the nanofibres, they have to be fastened to the core mechanically by wrapping at least one cover thread around them. A core with a smooth surface is preferred to facilitate the fastening and achieve good workability. The linear formation produced in this way can be processed by, e.g., weaving, knitting or other textile techniques, producing planar or three-dimensional textile formation from it. However, the compression of the nanofibre layer due to their tightening by the cover thread and the principle of the textile techniques used, the structure of the planar formation produced in this way always contains areas not covered with nanofibres (such as areas among the fibres, holes in the structures, etc.), making the resulting planar or three-dimensional formation unusable for filtering, because these spaces are easily permeated by the filtered medium without coming into contact with the nanofibres or passing through the nanofibre layer, thus being filtered. Even with increased nanofibre content per surface unit of this planar textile formation, therefore, its filtering effect is in fact reduced.

Fatemeh Bateni et al. in "Structural Characterization and Investigation of Selected Properties of Hybrid Yarn Coated with Carbon Nanotube Composite Nanofibers" (Journal of Applied Polymer Science, Vol. 128, No. 2, 14 August 2012, pp. 1143-1151) and Mohamed Basel Bazbouz and George K. Stylios in "A New Mechanism for the Electrospinning of Nanoyarns" (Journal of Applied Polymer Science, Vol. 124, No. 1, 4 October 2011, pp. 195-201) describe an electrospinning setup for producing hybrid yarns whereby nanofibres collected on a half-sphere are pulled out onto a core yarn emerging from inside of a hole at the centre of the half-sphere and twisted on the core yarn. A similar setup is disclosed in JP-A-2010 053457 providing a double wrap of nanofibres around a core yarn.

The objective of the invention is to eliminate or at least reduce the disadvantages of the state of the art technology by proposing new linear core-sheath type textile formation containing sheath of polymer nanofibres that would be usable for filtering, and also by proposing a filtering device containing this linear textile formation.

### Principle of the invention

The objective of the invention is achieved by means of a linear core-sheath type textile formation containing a sheath of polymer nanofibres, the essence of which consists in the fact that the core of the formation is a linear formation composed of fibres and/or microfibres that contains at least 100 fibres at least 1 mm long, protruding above its surface, per metre of its length, and polymer nanofibres are deposited on these fibres and joined with them by natural physical adhesion between said fibres and the nanofibres of the sheath, which is sufficient for most applications, notably for applications in filtering of gaseous media. This linear textile formation combines convenient mechanical properties of the core with convenient filtration properties of the sheath, with its sheath not compacted in any way, thus forming a voluminous layer that covers loose areas between two cores running parallel.

If needed, the material of the polymer nanofibres and/or their surface can contain at least one biologically and/or chemically active substance, such as an antimicrobial or fungicidal substance, a catalyser, a moisture and/or odour absorber, etc.

For use at elevated temperatures and/or high velocities of filtered media, it is convenient if the material of the polymer nanofibres is crosslinked.

Suitable core materials of the linear textile formation according to the invention include, notably, a thread, a fibre and/or microfibre ribbon or cable.

In addition, the objective of the invention will be achieved by means of a filtering device for filtering gaseous media, the essence of which consists in the fact that it contains at least one filtering layer, containing a linear core-sheath type textile formation according to the invention. This filtering layer is created, e.g., by loosely inserting the linear textile formation inside the sheath of the filtering device or arranging into a planar layer, e.g., by winding or cross-winding on a frame permeable for the filtered medium.

In order to achieve required parameters, e.g., filtering effect, filtering capacity, maximum pressure gradient, etc., the winding may have multiple layers.

Suitable frames permeable for the filtered medium include, e.g., a perforated tube or a planar frame with at least one passage opening.

### Explanation of drawings

The essence of the invention will be explained with respect to the enclosed drawings, where
Fig. 1 shows a photograph of the linear core-sheath type textile formation according to the invention;
Fig. 2 a photograph of the formation in closer detail;
Fig. 3 a schematic depiction of the first version of the filtering device containing the linear textile formation according to the invention, and its principle;
Fig. 4 a schematic depiction of the structure of the second version of the filtering device containing the linear textile formation according to the invention, and its principle; and
Fig. 5 a schematic depiction of the cross-section of the second version of the filtering device containing the linear textile formation according to the invention, and its principle.

### Examples of embodiment

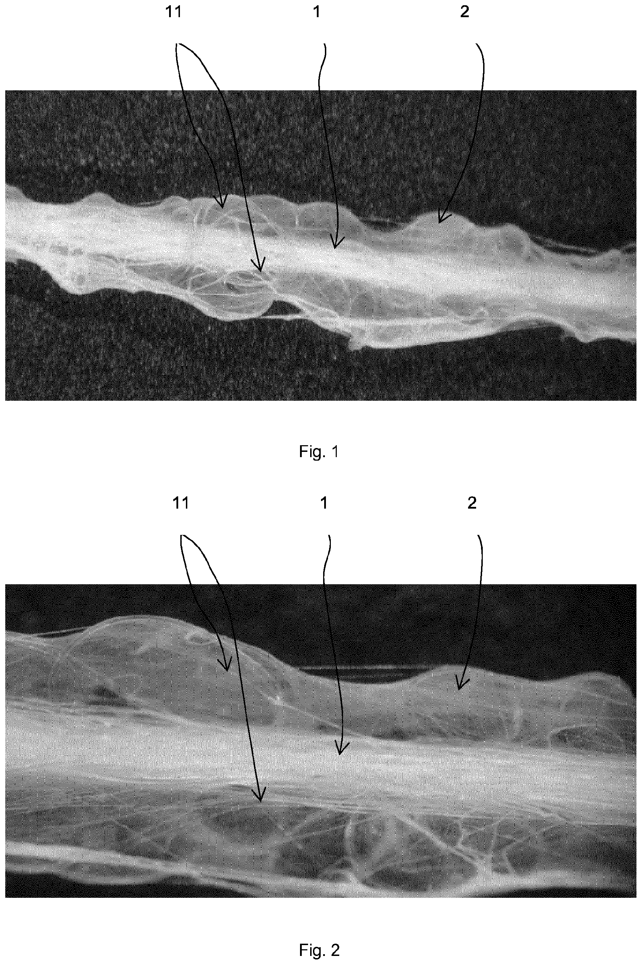

The linear core-sheath type textile formation according to the invention, shown in Fig. 1 and in a closer detail in Fig. 2, contains a core 1 consisting of a linear fibre and/or microfibre formation (e.g., thread, yarn, cable, fibre ribbon, etc.), which contains at least 100 fibres **11** at least 1 mm long, protruding above its surface, per metre of its length, and a sheath **2** of polymer nanofibres. The sheath consists of a voluminous layer of polymer nanofibres applied to the loose ends of the fibres **11** protruding above the surface of the core **1** and/or to loops that said fibres **11** create, and crosses the open areas between them. This loose form of the sheath **2** ensures that when a single linear textile formation or several linear textile formations according to the invention are wound or otherwise running parallel or crosswise, their sheaths overlap at least partially, meaning that there are no open spaces among them that would not be filled or covered with nanofibres, without the core **1** necessarily having to run through them. Thanks to the natural physical adhesion between the fibres 11 and the nanofibres, the adhesion created between the core **1** and the sheath 2 - or its fibres **11** - while depositing the nanofibres is sufficient to prevent them from being ripped off when manipulating the linear textile formation or straining it dynamically, e.g., with the filtered medium.

The low pressure gradient and high permeability of this linear textile formation - or its sheath **2** - make it usable as filtering material, particularly for filtering gaseous media. If needed, the nanofibres of the sheath **2** can contain at least one chemically and/or biologically active substance deposited, e.g., in the form of (nano)particles in their structure and/or on their surface. Said substance is favourably integrated in the structure of the nanofibres by adding either itself and/or its precursor to the polymer solution of melt before and/or during the electrostatic spinning, and is then forced into the structure of the nanofibres as they are formed. Depending on the expected use of the linear textile formation according to the invention or the filtering material made from it, suitable active substance may be an antimicrobial or fungicidal substance, a catalyser, a moisture and/or odour absorber, etc., or a blend of at least two of them.

In case the linear textile formation or the planar or three-dimensional formation made from it is to be used, e.g., in an environment with elevated temperature and/or for filtering medium moving at higher velocity, it is convenient if the material of the nanofibres is stabilised and/or crosslinked after being deposited onto the core **1** by appropriate agent and/or increased temperature, thus achieving its increased resistivity. Stabilisation of the nanofibre material generally consists in increasing its resistance towards degrading factors (such as temperature, moisture, effect of solvents, etc.), and is usually achieved by changing the chemical properties of its macromolecules or adding an additive (e.g., polyethylene oxide acetylation, polyimide imidization, addition of UV absorbent, etc.). Crosslinking is a special case of stabilisation consisting in interconnection of polymer chains and creation of three-dimensional net. The specific appropriate agent and/or increased temperature for stabilisation/crosslinking are given by the material of the polymer nanofibres, and may differ for different polymers.

The linear textile formation according to the invention is then produced by the method described in the international patent application WO 2011063772, or the analogous Czech patent application CZ 2009-797, by which nanofibres produced by electrostatic spinning of polymer solution or melt are applied to the fibre linear core **1** in the spinning area of an electric field of high intensity. In this process, at least two straight sections of the linear fibre core 1 are guided in the spinning area of the electric field, between which the core **1** is guided along at least part of the circumference of a guide roller, while said section of the core **1** forms an acute angle with the longitudinal axis of the guide roller when projected in the plane tangential to the guide roller circumference and passing through the appropriate section of the core **1.** In this method of guiding the core, the linear fibre core **1** rolls over the surface of the guide roller(s), resulting in its spinning around its longitudinal axis, so that its entire circumference is exposed to the approaching nanofibres progressively, or even repeatedly. Since the rotation of every subsequent straight section of the core **1** is reversed from the previous one, it is not subject to additional twist and it does not snarl. The deposited nanofibres attach themselves along the entire circumference of the core **1** to the protruding fibres **11** and progressively cover up the open spaces among them, thus forming an envelope in the form of voluminous sheath **2.**

The linear textile formation produced in this way is suitable primarily for use in filtering. The filtering layer of the filtering device can be formed by inserting at least one linear textile formation according to the invention loosely, without a predefined structure, in the defined area of the filtering device, or by arranging at least one linear textile formation in planar or three-dimensional formation of an appropriate structure, preferably a regular one. In both the versions, in the filtering layer of the filtering device the sheath **2** of component linear textile formations or sections of at least one linear textile formation arranged parallel and/or on top of each other at least partially overlaps, so that there are no open areas through which the filtered medium could pass without being filtered.

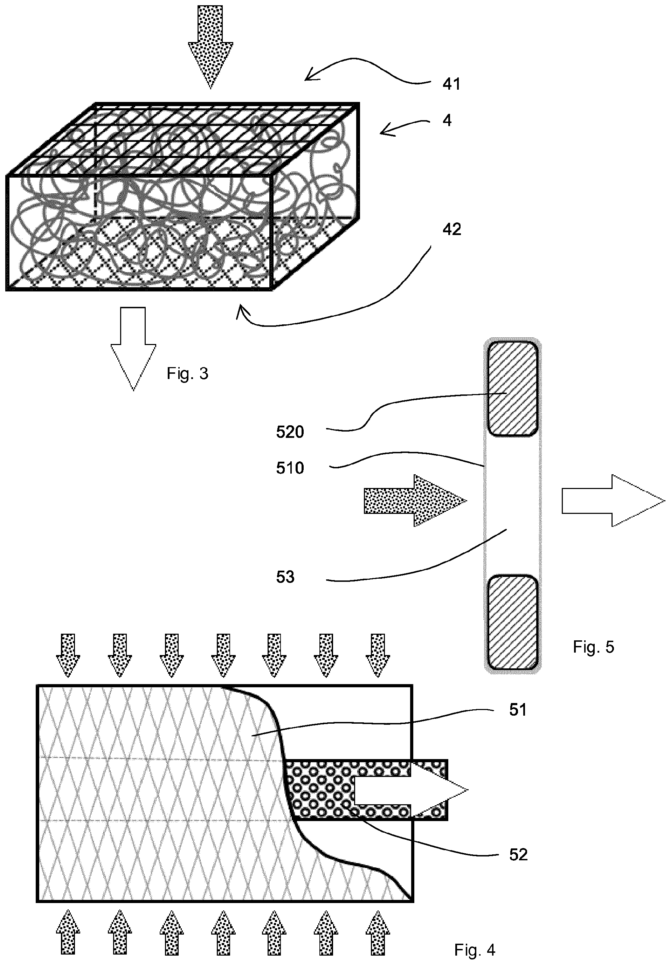

One of the possible versions of a filtering device with a filtering layer composed of at least one loosely inserted linear textile formation according to the invention is shown schematically in Fig. 3 for illustration. The filtering device contains a housing **4** with an inlet for the filtered medium **41,** an outlet **42** for the filtered medium and a sheath impermeable for the filtered medium, inside which is aranged the filtering layer composed of at least one loosely inserted and randomly arranged linear textile formation at an amount, or spatial capacity, that provides the filtering device with predefined value of required parameter, such as filtering effect, filtering capacity, maximum pressure gradient, etc. The shape, size and parameters of the filtering device produced in this way are dictated by its expected use. It is convenient if the inlet **41** and outlet **42** for the filtered medium are covered, at least partly, with a grate or mesh, e.g., plastic, metallic, textile, etc., that prevents the linear textile formation from being pulled out of the housing **4**, or serves as coarse filter for intercepting larger particles. The filtering device made in this way is characterised by greater filtering capacity, i.e., the number of particles that it intercepts until the critical pressure gradient is exceeded, compared to the filtering device composed of a planar layer of nanofibres with the same pressure gradient.

Fig. 4 shows a schematic depiction of one of the possible versions of the filtering device with filtering layer composed by arranging at least one linear textile formation according to the invention into a regular three-dimensional structure; this versions implies regular cross winding **51** on a frame permeable for the filtered medium, specifically a perforated tube **52.** Depending on the layout of the filtering device, the filtered medium then passes either through this winding **51** and is transported by the hollow of the core **52**, or conversely. In a not shown version of embodiment, the exterior of the winding **51** may have attached a grate or mesh (not shown), e.g., plastic, metallic, textile, etc., preventing the winding from mechanical damage or pulling off the core **52** and/or serving as coarse filter for intercepting larger particles.

Furthermore, Fig. 5 shows a schematic cross-section of another version of the filtering device with at least one linear textile formation according to the invention wound on a frame permeable for the filtered medium. In this version, the frame permeable for the filtered medium consists of planar frame **520** with at least one passage opening **53**, while the winding of the linear formation forms two separate filtering layers on it. In versions not shown, the area of the passage hole(s) **53** can be filled with suitable material, which will not significantly increase the pressure gradient of the filtering device but will provide support to the filtering layers. At least one of the filtering layers can be at least partially covered with a grate or mesh (not shown), e.g., plastic, metallic, textile, etc., preventing the winding from mechanical damage or pulling off the frame **520** and/or serving as coarse filter for intercepting larger particles.

In another, not shown, version of embodiment, at least one linear textile formation according to the invention runs on the frame **520** differently, e.g., passing through guide holes in the frame **520,** or at least two windings run across the frame **520** in different directions, or sections of the linear textile formation are fixed, e.g., glued, to the frame **520** that only cover its passage hole(s) **53**; said sections may run parallel or essentially parallel or in the form of a grate or in any other way, etc.

The advantage of these filtering devices is not only their higher filtering capacity compared to a planar layer of nanofibres with the same pressure gradient, but also the ability to define their pressure gradient and filtering effectivity by changing the density and/or thickness of the winding **51**, **510.** A specific comparison of the parameters achieved is indicated in Example 4 below.

In case when two or more linear textile formations according to the invention are used in a single filtering device, these may be identical linear textile formations, or at least one of them may differ in its diameter and/or type and/or material of the core **1** and/or quantity and/or material and/or diameter of the nanofibres of the sheath **2** and/or the presence/absence of active substance(s) in the sheath **2** and or the type and/or effect thereof.

In order to achieve required parameters, such as filtering effect, filtering capacity, maximum pressure gradient, etc., the filtering device according to the invention may contain one filtering layer composed of one or more layers of the linear textile formation, or more such filtering layers. In addition, if needed, it may be fitted with a coarse filtering layer for filtering coarse particles, e.g., a textile (woven, non-woven), a foam material, a metallic or plastic grate, etc., arranged upstream of the filtering layer in the sense of movement of the filtered medium. Said layer may also serve as protection of the filtering layer from mechanical damage.

In any embodiment of the filtering device according to the invention, the coherence of its filtering layer may be increased by adding thread(s) or another linear fibre and/or microfibre formation with an adhesive into its structure; this would depend on the method of guiding the linear textile formation according to the invention, the expected strain on the filtering layer, etc., parallel or essentially parallel, perpendicular or forming any angle with it.

The following examples describe concrete, but not the only, versions of embodiment of the linear textile formation according to the invention, including a comparison of parameters of the filtering device containing a filtering layer composed of this linear textile formation, with the parameters of filtering device with a filtering layer composed of planar layer of polymer nanofibres.

### Example 1

Using the method according to WO 2011063772, or the analogous CZ 2009-797, a sheath produced by electrostatic spinning of 18% polyurethane solution in (dimethyl)-formamide was deposited onto a core of PP 660 dtex shaped by an air jet. On average, this core contains 232.3 fibres at least 1 mm long, protruding above its surface, per metre of its length.

The electrostatic spinning employed spinning electrode consisting of a roller according to EP 1673493, or the analogous CZ 294274, while the electrically conductive core was used directly as the collecting electrode. The distance between the electrodes was 200 mm, their differential voltage was 72 kV, and the air humidity was 10 % RH.

Using an air nozzle, a quantity of the linear textile formation produced in this way necessary to achieve the required maximum pressure gradient was fed into a filtering box, where it was laid loosely (see Fig. 3).

### Example 2

Using the method according to WO 2011063772, or the analogous CZ 2009-797, a sheath produced by electrostatic spinning of 22% solution of polyamide carboxylic acid (PAC) in (dimethyl)-formamide was deposited onto a core made of shaped ribbon of ECO11 T220 T10C OW glass fibres. The electrostatic spinning employed spinning electrode consisting of a roller according to EP 1673493, or the analogous CZ 294274, while the electrically conductive core was used directly as the collecting electrode. The distance between the electrodes was 180 mm, their differential voltage was 55 kV, and the air humidity was 15 % RH.

Afterwards, the linear textile formation produced in this way was exposed to a temperature of 250°C in a hot air oven for a period of 12 hours, resulting in stabilisation of the nanofibre material, giving the formation high temperature resistance, which allows its use for filtering hot gases. For practical use, it was then cross-wound on a perforated tube made of corrosion-resistant steel (Fig. 4).

### Example 3

Using the method according to WO 2011063772, or the analogous CZ 2009-797, a sheath produced by electrostatic spinning of 15% solution of polylactic acid (PLA) in N,N (dimethyl)-formamide was deposited onto a core made of thread of 100% PLA (INGEO TASLAN 167/48x3). The electrostatic spinning employed spinning electrode consisting of a roller according to EP 1673493, or the analogous CZ 294274, while the electrically conductive core was used directly as the collecting electrode. The distance between the electrodes was 150 mm, their differential voltage was 60 kV, and the air humidity was 20 % RH.

For practical use, the linear textile formation produced in this way was then cross-wound on a perforated tube made of corrosion-resistant steel (Fig. 4).

### Example 4

Using the method according to WO 2011063772, or the analogous CZ 2009-797, a sheath produced by electrostatic spinning of 7% solution of polyacrylonitrile (PAN) in N,N (dimethyl)-formamide was deposited onto a core made of four-ply twinned 100% aramide fibres (Nomex III type of polymer) thread purchased from Aramex-Garne GMBH (under product designation T-450). The electrostatic spinning employed spinning electrode consisting of a roller according to EP 1673493, or the analogous CZ 294274, while the electrically conductive core was used directly as the collecting electrode. The distance between the electrodes was 150 mm, their differential voltage was 67 kV, and the air humidity was 12 % RH.

For practical use, the linear textile formation produced in this way was then tightly wound on a rectangular frame, so that the sheaths of the different runs overlapped at least partially, and compared to a filtering device with a filtering layer composed of planar layer of the same polymer nanofibres in series of tests. The comparison results are shown in Tables 1 and 2 and indicate that the use of the linear textile formation according to the invention allows the use of greater number of nanofibres per unit of the filtering layer surface with the same pressure gradient, thus achieving higher filtering effect.

**Table 1**

| **Pressure gradient (filter surface area: 100 cm², air flow rate: 50 l/min)** | **Weight of polymer nanofibres per unit of filtering layer surface** | |
|---|---|---|
| | **Planar layer of nanofibres** | **Winding of linear textile formation according to the invention** |
| 100 Pa | 1.8 g/m² | 44 g/m² |
| 200 Pa | 3 g/m² | 65 g/m² |
| 1000 Pa | 18 g/m² | 190 g/m² |

At the same time, a pressure gradient four to eleven times lower is achieved with a weight of polymer fibres per unit of filtering layer surface ten to twenty times greater; see Table 2. This is crucial for the utilisation of the linear textile formation as a carrier of chemically and/or biologically active substance(s), because into the filtering layer made of it, larger amount of the polymer nanofibres can be deposited, thus, larger quantity of the chemically and/or biologically active substance(s) can be stored in their structure and/or on their surface without significantly increasing the pressure gradient.

**Table 2**

| **Planar layer of nanofibres** | | **Winding of linear textile formation according to the invention** | | |
|---|---|---|---|---|
| **Planar weight of nanofibres** | **Pressure gradient** | **Planar weight of nanofibres** | **Pressure gradient** | **No. of winding layers** |
| 1.9 g/m² | 132 Pa | 18 g/m² | 12 Pa | 2 |
| 3.5 g/m² | 305 Pa | 36 g/m² | 70 Pa | 4 |
| 17 g/m² | 940 Pa | 50 g/m² | 120 Pa | 6 |

## Claims

1. A linear core-sheath type textile formation containing a sheath of polymer nanofibres **characterised in that,** the core (1) of the formation is a linear formation composed of fibres and/or microfibres and contains at least 100 fibres (11) at least 1 mm long, protruding above its surface, per metre of its length, and polymer nanofibres are deposited on said fibres (11) creating a voluminous and loose sheath, which is joined with these fibres (11) by natural physical adhesion between these fibres (11) and the nanofibres of the sheath (2).

2. The linear textile formation according to the Claim 1 **characterised in that,** at least one biologically and/or chemically active substance from the group of antimicrobial substance, fungicidal substance, catalyser, moisture and/or odour absorber, is deposited in the material of the polymer nanofibres and/or on their surface.

3. The linear textile formation according to the Claim 1 or 2 **characterised in that,** the material of the polymer nanofibres is crosslinked.

4. The linear textile formation according to Claim 1 **characterised in that,** the core (1) is composed of a yarn or a twinned thread.

5. The linear textile formation according to Claim 1 **characterised in that,** the core (1) is a ribbon composed of fibres and/or microfibres.

6. The linear textile formation according to Claim 1 **characterised in that,** the core (1) is a cable composed of fibres and/or microfibres.

7. A filtering device for filtering gaseous media **characterised in that,** it contains at least one filtering layer that contains at least one linear core-sheath type textile formation according to any of Claims 1 to 6.

8. The filtering device according to the Claim 7 **characterised in that,** the filtering layer is nested in a random manner in a housing (4) impermeable for the filtered medium with an inlet (41) and an outlet (42) for the filtered medium.

9. The filtering device according to the Claim 7 **characterised in that,** the filtering layer is mounted on a frame (52, 520) permeable for the filtered medium and contains sections of the linear textile formation arranged parallel or essentially parallel without void spaces between their sheaths (2).

10. The filtering device according to the Claim 7 **characterised in that,** the filtering layer is mounted on a frame (52, 520) permeable for the filtered medium and contains linear textile formations arranged parallel or essentially parallel without void spaces between their sheaths (2).

11. The filtering device according to the Claim 7, 9 or 10 **characterised in that,** the filtering layer is composed of winding (51, 510) of at least one linear textile formation on a/the frame (52, 520) permeable for the filtered medium.

12. The filtering device according to the Claim 11, **characterised in that,** the winding is of multiple layers.

13. The filtering device according to the Claim 11 or 12 **characterised in that,** the winding is a cross-winding.

14. The filtering device according to any of the Claims 11 to 13 **characterised in by that,** the frame (52) permeable for the filtered medium is a perforated tube (52).

15. The filtering device according to any of the Claims 11 to 13 **characterised in that,** the frame (520) permeable for the filtered medium is a planar frame (520) with at least one passage opening (53).

## Patentansprüche

1. Lineares Textilgebilde des Typs Kern-Mantel, das einen Mantel aus den Polymernanofasern aufweist, **dadurch gekennzeichnet, dass** der Kern (1) von diesem Gebilde ein lineares Gebilde ist, das durch Fasern und/oder Mikrofasern gebildet wird, das auf 1 Meter seiner Länge mindestens 100 Fasern (11) mit der Länge von mindestens 1 mm aufweist, die über seine Oberfläche hinaus treten, und auf diesen Fasern (1) die Polymernanofasern gelagert sind, die einen Volumen- und Freimantel bilden, der mit diesen Fasern (11) durch eine natürliche physikalische Adhäsion zwischen diesen Fasern (11) und Nanofasern des Mantels (2() verbunden ist.

2. Lineares Textilgebilde nach dem Anspruch 1, **dadurch gekennzeichnet, dass** in dem Material der Polymernanofasern und/oder auf ihrer Oberfläche mindestens ein biologisch und/oder chemisch aktiver Stoff der Gruppe antimikrobieller Stoff, fungizider Stoff, Katalysator, Feuchtigkeits- und/oder Geruchsabsorber gelagert ist.

3. Lineares Textilgebilde nach dem Anspruch 1 oder 2, **dadurch gekennzeichnet, dass** das Material der Polymernanofasern vernetzt wird.

4. Lineares Textilgebilde nach dem Anspruch 1, **dadurch gekennzeichnet, dass** der Kern (1) durch Faden oder Zwirn gebildet wird.

5. Lineares Textilgebilde nach dem Anspruch 1, **dadurch gekennzeichnet, dass** der Kern (1) durch einen Streifen aus Fasern und/oder Mikrofasern gebildet wird.

6. Lineares Textilgebilde nach dem Anspruch 1, **dadurch gekennzeichnet, dass** der Kern (1) durch ein Spinnbändchen aus Fasern und/oder Mikrofasern gebildet wird.

7. Filtrationsmittel zum Filtern von gasförmigen Medien, **dadurch gekennzeichnet, dass** es mindestens eine Filtrationsschicht aufweist, die mindestens ein lineares Textilgebilde des Typs Kern-Mantel nach einem der Ansprüche 1 bis 6 aufweist.

8. Filtrationsmittel nach dem Anspruch 7, **dadurch gekennzeichnet, dass** die Filtrationsschicht mit einer zufälligen Anordnung in einem fürs zu filternde Medium undurchlässigen Mantel (4) mit einem Eintritt (41) und Austritt (42) des zu filternden Mediums frei gelagert ist.

9. Filtrationsmittel nach dem Anspruch 7, **dadurch gekennzeichnet, dass** die Filtrationsschicht auf einem fürs zu filternde Medium durchlässigen Rahmen (52, 520) gelagert ist, wobei sie die Bereiche des linearen Textilgebildes aufweist, die parallel laufend oder im Grunde genommen parallellaufend, ohne Freiräume zwischen ihren Mänteln (2) angeordnet sind.

10. Filtrationsmittel nach dem Anspruch 7, **dadurch gekennzeichnet, dass** die Filtrationsschicht auf einem fürs zu filternde Medium durchlässigen Rahmen (52, 520) gelagert ist, wobei sie die linearen Textilgebilden aufweist, die parallel laufend oder im Grunde genommen parallellaufend, ohne Freiräume zwischen ihren Mänteln (2) angeordnet sind.

11. Filtrationsmittel nach dem Anspruch 7, 9 oder 10, **dadurch gekennzeichnet, dass** die Filtrationsschicht durch eine Wicklung von mindestens einem linearen Textilgebilde auf dem fürs zu filternde Medium durchlässigen Rahmen (52, 520) gebildet wird.

12. Filtrationsmittel nach dem Anspruch 11, **dadurch gekennzeichnet, dass** die Wicklung mehrlagig ist.

13. Filtrationsmittel nach dem Anspruch 11 oder 12, **dadurch gekennzeichnet, dass** die Wicklung eine Kreuzwicklung ist.

14. Filtrationsmittel nach einem der Ansprüche 11 bis 13, **dadurch gekennzeichnet, dass** der fürs zu filternde Medium durchlässige Rahmen (52) eine perforierte Hülse ist.

15. Filtrationsmittel nach einem der Ansprüche 11 bis 13, **dadurch gekennzeichnet, dass** der fürs zu filternde Medium durchlässige Rahmen (52) ein planer Rahmen (520) mit mindestens einer Durchgangsöffnung (53) ist.

## Revendications

1. Structure textile linéaire du type noyau-gaine, qui contient une gaine en nanofibres polymères, **caractérisé en ce que** le noyau (1) de cette structure est une structure linéaire formée par les fibres et / ou les microfibres, qui à 1 mètre de sa longueur contient au moins 100 fibres (11) d'au moins 1 mm de long, qui montent au-dessus de sa surface et sur ces fibres (11) les nanofibres polymères sont disposées, qui crée la gaine volumétrique et lâche qui est associé à ces fibres (11) par l'adhésion physique naturelle entre les fibres (11) et les nanofibres de la gaine (2).

2. Structure textile linéaire selon la revendication 1, **caractérisée en ce qu** 'au moins une substance biologiquement et / ou chimiquement active du groupe des agents antimicrobiens, fongicide, catalyseur, absorbeur d'humidité et / ou d'odeur est déposée dans et / ou à la surface des nanofibres polymères.

3. Structure textile linéaire selon la revendication 1 ou 2, **caractérisée en ce que** le matériau polymère à base de nanofibres est réticulé.

4. Structure textile linéaire selon la revendication 1, **caractérisée en ce que** le noyau (1) est formé par un fil ou un fil retordé.

5. Structure textile linéaire selon la revendication 1, **caractérisée en ce que** le noyau (1) est formé d'une bande de fibres et / ou de microfibres.

6. Structure textile linéaire selon la revendication 1, **caractérisée en ce que** le noyau (1) est formé par un petit câble en fibres et / ou en microfibres.

7. Dispositif de filtrage pour filtrer des milieux gazeux, **caractérisé en ce qu** 'il comprend au moins une couche filtrante qui comprend au moins une structure textile linéaire du type noyau-gaine selon l'une quelconque des revendications de1 à 6.

8. Dispositif de filtrage selon la revendication 7, **caractérisé en ce que** la couche filtrante est disposée dans l'arrangement aléatoire librement dans une gaine impénétrable (4) pour le moyen filtrant avec une entrée (41) et une sortie (42) du moyen filtré.

9. Dispositif filtrant selon la revendication 7, **caractérisé en ce que** la couche filtrante est disposée sur le cadre perméable pour le moyen filtrant (52, 520), tandis qu' il comprend des sections d'une structure textile linéaire qui sont disposées parallèlement ou en principe parallèlement, sans les espaces libres entre leurs gaines (2).

10. Dispositif filtrant selon la revendication 7, **caractérisé en ce que** la couche filtrante est disposée sur le cadre perméable pour le moyen filtrant (52, 520), tandis qu'il comprend des structures textiles linéaires disposées parallèlement ou en principe parallèlement, sans les espaces libres entre leurs gaines (2).

11. Dispositif filtrant selon la revendication 7, 9 ou 10, **caractérisé en ce que** la couche filtrante est formée par un enroulement d'au moins une structure textile linéaire sur un cadre (52, 520) perméable au moyen filtré.

12. Dispositif de filtrage selon la revendication 11, **caractérisé en ce que** l'enroulement est multicouche.

13. Dispositif de filtrage selon la revendication 11 ou 12, **caractérisé en ce que** l'enroulement est croisé.

14. Dispositif de filtrage selon l'une quelconque des revendications 11 à 13, **caractérisé en ce que** le cadre (52) perméable au moyen filtrant est un petit tube perforé.

15. Dispositif de filtrage selon l'une quelconque des revendications 11 à 13, **caractérisé en ce que** le cadre (520) perméable au moyen filtrant est un cadre plat (520) avec au moins un trou traversant (53).
